# EUROPEAN PATENT SPECIFICATION

(11) **EP 4 481 698 B1**
(45) Date of publication and mention of the grant of the patent: **05.08.2026**
(21) Application number: 23180529.2
(22) Date of filing: 21.06.2023
(51) Int. Cl.: G06V 30/422, G06V 30/32

(54) **A METHOD FOR PROCESS GRAPHIC SMART DESIGN**
VERFAHREN FÜR PROZESSGRAFIK-SMART-DESIGN
PROCÉDÉ DE CONCEPTION INTELLIGENTE GRAPHIQUE DE PROCESSUS

(43) Date of publication of application: 25.12.2024
(60) Divisional application: 26163186.5
(73) Proprietor: ABB SCHWEIZ AG, 5400 Baden (CH)
(72) Inventor: DONZELLA, Fabio, 16132 Genova (IT); COSTA, Elisa, 16157 Genoa (IT)
(74) Representative: Kransell & Wennborg KB

(56) References cited:
- US-A1- 2005 273 761
- US-A1- 2006 227 140
- AMRAEE SOMAIEH ET AL: "Handwritten Logic Circuits Analysis Using the YOLO Network and a New Boundary Tracking Algorithm", vol. 10, 19 July 2022 (2022-07-19), pages 76095 - 76104, XP093096628, Retrieved from the Internet <URL:https://ieeexplore.ieee.org/ielx7/6287639/9668973/09832898.pdf?tp=&arnumber=9832898&isnumber=9668973&ref=aHR0cHM6Ly9pZWVleHBsb3JlLmllZWUub3JnL2Fic3RyYWN0L2RvY3VtZW50Lzk4MzI4OTg=> [retrieved on 20231031], DOI: 10.1109/ACCESS.2022.3192467

## Description

### Field of the Invention

The present invention generally relates to a computer-implemented method to insert components into a process graphic of an industrial automation system. The present invention further relates to a control unit, a system, and a computer program product.

### Background

In industrial automation, process graphics are used as a tool to visually represent components of a plant. Currently, such process graphics are engineered with desktop dedicated tools to manually draw components of the plant.

Manually drawing the components leads to a slow process for completing a graphic of an entire plant which typically involves a high number of components of different complexity.

Some possible process graphic systems involve predefined components that may be customized and inserted from a selection database. However, a drawback is that there may be a high number of customized and/or predefined components that are difficult to distinguish and retrieve for correct use. Relevant prior art documents include:
US 2005/273761 A1 describing a method for creating block diagrams by comparing the attributes of freehand user input to a database of stored patterns to identify and render a matching component;
US 2006/227140 A1 describing a method for beautifying and regularizing hand-drawn sketches by identifying geometric primitives and applying implicit geometric constraints, to create a formal representation that can be compared against a library of symbols;
S. Amraee et al., Handwritten Logic Circuits Analysis Using the YOLO Network and a New Boundary Tracking Algorithm, in IEEE Access, vol. 10, pp. 76095-76104, 2022, doi: 10.1109/ACCESS.2022.3192467 describing a method for analyzing completed handwritten logic circuits by first identifying gates using the YOLO neural network and then determining wire connections through a boundary tracking algorithm to ultimately generate the circuit's binary function and truth table.

Accordingly, there is room for improvements with regards to process graphics for industrial plants.

### Summary

In view of the above-mentioned and other drawbacks of the prior art, it is an object of the present invention to provide a method that can predict a next component in a present process graphics, whereby the method at least partly alleviates drawbacks of prior art.

According to a first aspect of the invention, there is provided a computer-implemented method to insert components into a process graphic of an industrial automation system, the method comprising: receiving a data signal indicating a drawing input in a working area of a graphical platform shown on a computer display; identifying a working area of the drawing input; identifying at least one characteristic of the drawing input, predicting at least one candidate component from a list of available components stored in a data storage that best matches the at least one characteristic of the drawing input, and providing a list of the at least one candidate component on the computer display.

The present invention is at least partly based on the realization to utilize prediction algorithms to predict the component that the user is presently drawing in the graphical platform, i.e., a digital drawing board on the screen. Once at least one candidate component is predicted, it or they can be provided as suggested components of the user who may select a component from the suggested components. In this way, completing a process graphic can be made faster and easier than with prior art solutions.

A process graphic is a graphical representation of a plant or an industrial automation system. Such process graphic is used for visualizing the components in the industrial automation system. The components may be any component, for the sake of exemplification only, a component may be a valve, a relay, a switch, a pipe, processing circuitry, communication lines, wiring, power tools, robotic devices, rolling mills, etc.

The data signal comprises information of a presently drawn input in the process graphics. For example, the signal may include coordinates of a drawn line so that the shape of the drawn line can be determined and evaluated.

The working area is a sub-part or sub-area of the process graphics that encloses the drawing input. The working area may be a crop of the drawing input.

In embodiments, the method may comprise receiving a signal indicating a selection of a component from the list of the at least one candidate component and replacing the drawing input with the selected candidate component in the working area. In other words, the user does not have to complete drawing the component. Instead, once at least one candidate component is predicted and subsequently selected, it automatically replaces the partially drawn component in the working area.

A drawing input is a partially completed drawing of a component of the industrial automation system that is intended to be inserted into the presently opened process graphic.

In embodiments, the method may comprise obtaining data indicating technical requirements of the industrial automation system, wherein predicting the at least one candidate component includes finding at least one candidate component that fulfill the technical requirements. This advantageously reduces the number of available candidate components and thus provides for faster prediction and selection. Technical requirements may be for example electric current or voltage ratings, pressure ratings, dimensions of components, etc.

The step of predicting comprises evaluating the components already included in the presently working process graphic, and predicting the at least one candidate component that functionally matches the already included components in the process graphics. In other words, components that are incompatible with components already in the presently open process graphics are advantageously disregarded in the prediction.

In embodiments, the method may comprise accessing selection history of candidate components, wherein the step of predicting comprises evaluating the selection history for predicting the at least one candidate component. That is, the prediction may be based on user history including prior selected candidate components to predict the candidate components more accurately.

In embodiments, providing, once a candidate component is selected, a list of selectable available configurations of the selected candidate component.

In embodiments, the method may comprise predicting, once a candidate component is selected, a set of additional elements of the industrial automation system that are functionally connectable with the selected candidate component and inserting one of the additional elements in the process graphic shown on the computer display. In other words, elements that are connectable with a selected candidate component may be predicted based on the selected candidate component and shown as suggested next element to be inserted in the process graphics. The at least one predicted additional element may be displayed on the display screen as an overlay in the process graphic. This improves the user friendliness of the proposed solution. To be functionally connectable means that the components are compatible to work together or to be fitted together.

In embodiments, the method may comprise providing a machine learning recognition algorithm; processing the drawing input in the machine learning recognition algorithm to predict the at least one candidate component. Using a machine learning algorithm improves the predictions and also allows for continuously improving the predictions as the algorithm is used. That is, the method may comprise performing training steps of the machine learning recognition algorithm using data of historical component selections.

The machine learning algorithm may be part of a content-based filtering recommender system. More specifically, cluster analysis may be considered with a proper usage of a K-means algorithm. An initial analysis of the drawing input may be based on a perception AI area of the of the recommender system, which may be a combination of image recognition and deep learning neural networks, for example convolutional neural networks to analyze the drawings input. Predicting the at least one candidate component may subsequently be performed using the cluster analysis with usage of a K-means algorithm in the recommender system to produce improved results. That is, a combination of a convolutional neural network and a K-means algorithm with cluster analysis combined may provide the best possible suggested industrial automation item for the user with the other inputs already mentioned, such as drawing input of the item, system configuration, user history and process graphics available in the system. The cluster analysis may take the output of the convolutional neural network as input.

In embodiments, the drawing input may be received from a user input interface including at least one of a touch screen interface, a graphic board interface, a keyboard, and a mouse device.

Preferably, the at least one characteristic of the drawing input may include the shape of the drawing input.

According to a second aspect of the invention, there is provided a control unit configured to perform the steps of any one of the herein disclosed methods.

Further effects and features of the second aspect of the invention are largely analogous to those described above in connection with the first aspect of the invention.

According to a third aspect of the invention, there is provided a system comprising a computer display and a control unit according to the second aspect.

Further effects and features of the third aspect of the invention are largely analogous to those described above in connection with the first aspect and the second aspect of the invention.

According to a fourth aspect of the invention, there is provided a computer program product comprising a computer readable medium having stored thereon computer program code for insert components into a process graphic of an industrial automation system, wherein the computer program product comprises: code for receiving a data signal indicating a drawing input in a working area of a graphical platform shown on a computer display; code for identifying a working area of the drawing input; code for identifying at least one characteristic of the drawing input, code for predicting at least one candidate component from a list of available components stored in a data storage that best matches the at least one characteristic of the drawing input, and code for providing a list of the at least one candidate component on the computer display.

The computer readable medium may be a non-transitory computer-readable storage medium.

Further effects and features of the fourth aspect of the invention are largely analogous to those described above in connection with the first aspect, the second aspect, and the third aspect of the invention.

Further features of, and advantages with, the present invention will become apparent when studying the appended claims and the following description.

### Brief Description of the Drawings

These and other aspects of the present invention will now be described in more detail, with reference to the appended drawings showing an example embodiment of the invention, wherein:
Fig. 1 illustrates a system according to an embodiment of the invention;
Fig. 2 is a flow-chart of method steps according to embodiments of the present invention;
Fig. 3 illustrates a process graphics according to an embodiment of the invention;
Fig. 4 is a flow-chart of method steps according to embodiments of the present invention; and
Fig. 5 illustrates a process graphics according to an embodiment of the invention.

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only.

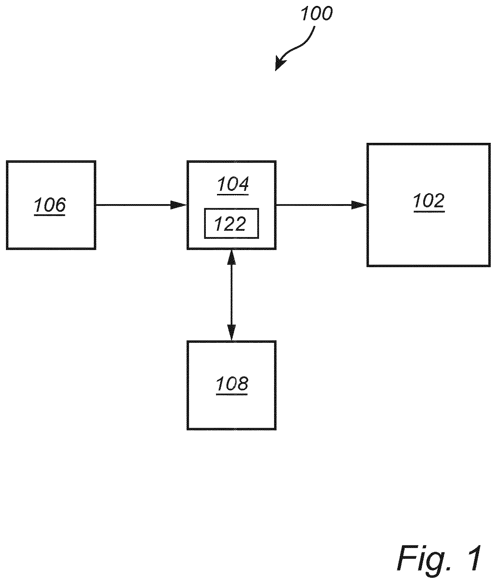

Fig. 1 illustrates a system 100 comprising a computer display 102 and a control unit 104. The control unit 104 is connected to the display 102 to control what is shown on the display 102. The connection may be wireless or via a cable such as HDMI, VGA, USB, or similar.

Furthermore, the system 100 comprises a user input interface 106 and a data storage 108.

The control unit 104 is connected, wirelessly or via a cable, to the user input interface 106 to receive instructions that can be processed by the control unit 104. The user input interface 106 may include at least one of a touch screen interface, a graphic board interface, a keyboard, and a mouse device.

The data storage 108 may be an on-site data storage such as a local hard drive or SD-card, or the data storage 108 may be a cloud-based service, that is, a data storage on a server.

Wireless communication may be though e.g., Wi-Fi, blue tooth, or cellular networks.

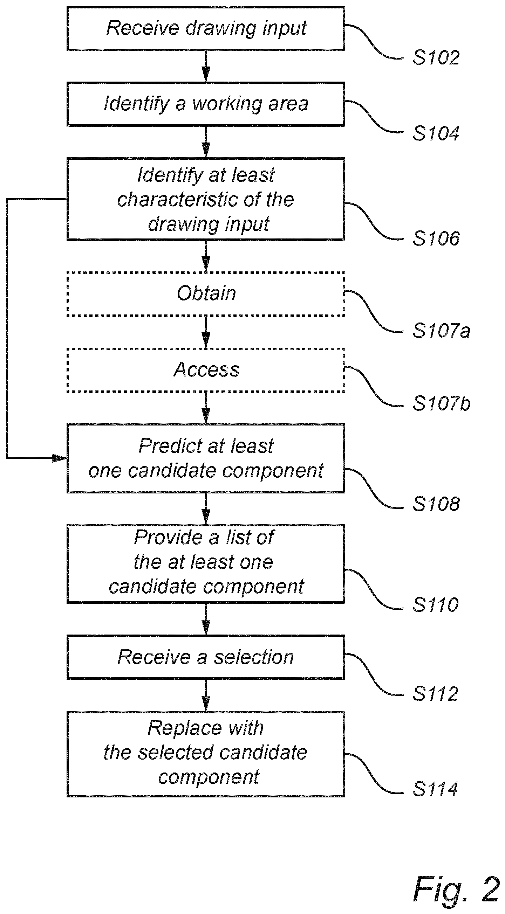

Fig. 2 is a flow-chart of method steps according to embodiments of the present invention. The computer-implemented method is for inserting components into a process graphic of an industrial automation system.

In step S104, receiving, by the control unit 104, a data signal indicating a drawing input in a working area of a graphical platform shown on a computer display 102. The drawing input may be received from the user input interface 106 maneuvered by a user.

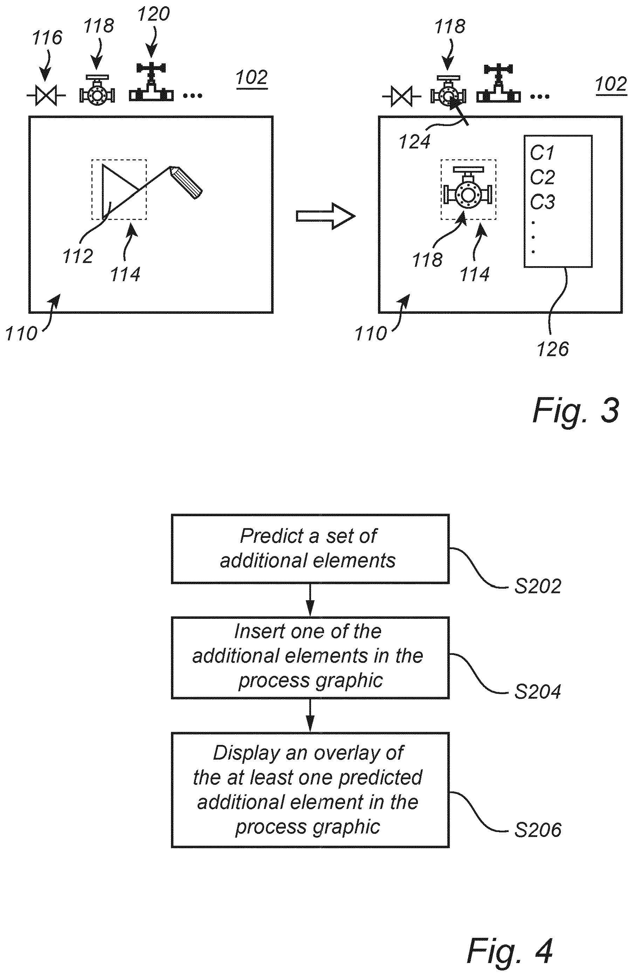

Fig. 3 illustrates an example process graphics 110 shown on a display 102. A user has provided a drawing input 112 in the form of a simple shape in an attempt to draw a component of the intended industrial automation system.

In step S104, identifying, by the control unit 104, a working area 114 of the drawing input. The working area 114 is the immediate area surrounding the drawing input 112, such as a crop of the working area or predetermined size to fit the components that are to be inserted.

In step S106, identifying, by the control unit 104, at least one characteristic of the drawing input 112. A characteristic of the drawing input may for example include the shape or shapes of the drawing input. The shapes may be determined by finding and evaluating, by the control unit 104, the coordinates of the drawing input 112 using e.g., shape recognition, or other machine learning algorithms.

In step S108, predicting, by the control unit 104, at least one candidate component from a list of available components stored in the data storage 108 that best matches the at least one characteristic of the drawing input 112. The control unit 104 may employ an algorithm that takes the drawing input 112 as input and evaluates the drawing input 112 in view of graphical representations of available components stored in the data storage 108. As shown in fig. 3, a set of candidate components 116, 118, 120 are predicted, and provided as a list on the computer display 102, in step S110. The list may be considered a visual representation and not necessarily a list *per* se.

Preferably, a machine learning recognition algorithm 122 is provided. Thus, the control unit 104 employs the machine learning recognition algorithm 122 and processes the at least partial drawing 112 in the machine learning recognition algorithm to predict the at least one candidate component 116, 118, 120. Using a machine learning algorithm that has trained to find the at least one candidate component that best matches the drawing input 112 vastly improves the predictability and accuracy of the method.

The machine learning algorithm may utilize cluster analysis usage of the K-means algorithm. Moreover, a combination of image recognition and deep learning neural networks, such as convolutional neural networks, in a recommender system may further be used. These two techniques combined may provide the best possible suggested component for the user with inputs such as drawing input of the item, system configuration, user history and process graphics available in the system. In a suggested architecture, a convolutional neural network may be used as a perception AI to analyze the drawing input to predict the intended shape of the drawing input, and a k-means algorithm may be sued to predict the candidate component.

Training data are obtained by fetching existing graphics during an initial training phase where an engineer, or other user, draws some pre-defined elements in order to train the machine learning network.

In other words, the machine learning algorithms 122 are configured to foresee the most probable element or component that the operator is trying to represent, matching the sketch 122 drawn with a list of industrial automation items available in the system and stored in the data storage 108.

The identified working area 114, is analyzed, at runtime, to process the sketch 122 drawn in this specific area, extrapolate the main characteristics thereof and provide a list of possible matches, i.e.., a subset of all existing process graphics items available in the system. The prediction may consider the components already available in the system, the context of the specific configuration of the system, based on the plant requirements, and the user selection history. In absence of data about history and context, the system can be configured to show a set of "symbols" provided by some specific standards.

Preferably, the control unit 106 may perform training of the machine learning recognition algorithm 122 using data of historical component selections to continuously improve its predictions.

In step S112, receiving, by the control unit 104, a signal indicating a selection of a component 118 from the list of the at least one candidate component 116, 118, 120. As shown in fig. 3, the user selects the component 118 using the user input interface 106 represented by arrow 124. In this case, the component 118 is a valve.

In step S112, the control unit 104 replaces the at least partial drawing 112 with the selected candidate component 118 in the working area 114.

To improve the predictions, the step S108 of predicting may further comprise evaluating the components already included in the process graphic 110. For example, the component 118 is now included in the process graphic 110 in fig. 3. When a further drawing input is received, the control unit 104 may predict, in step S108, the next component based on which of the components in the stored set of components that that functionally matches the already included component(s) 118. A functional match is components that can operate together cooperatively in a system in a compatible way.

Optionally, the control unit 104 may obtain, in step S107a data indicating technical requirements of the industrial automation system. In such case, the step S108 further includes predicting the at least one candidate component 116, 118, 120 by finding at least one candidate component 118 that fulfill the technical requirements of the drawn industrial automation system. That is, the control unit 104 and its prediction algorithm may take into account the configuration of the industrial automation system that is being drawn when predicting the component.

In a further optional step that may be included in the training of the machine learning algorithm, is step S107b, in which the control unit 104 accesses selection history of candidate components. In this case, the step S108 of predicting comprises evaluating the selection history for predicting the at least one candidate component. The selection history may be stored on the data storage 108 and may be used as a further input to the machine learning algorithm 122. The selection history includes components selected during the creation of the process graphics.

Once a candidate component 118 is selected, shown in fig. 3, the control unit 104 may providing a list 126 of selectable available configurations C1-C3 of the selected candidate component. The configurations relate to functional configurations specific to the selected component. The list 126 may be shown as a drop-down menu on the display next to the selected component.

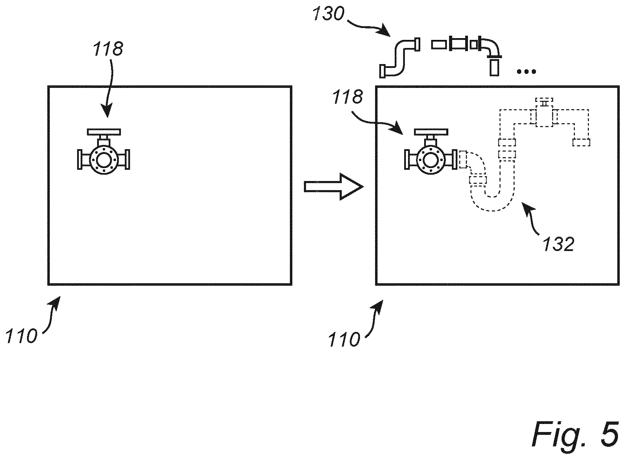

Fig. 4 is a flow-chart of method steps according to embodiments of the present invention. The steps of the flow-chart in fig. 4 are subsequent to the steps of fig. 2. In other words, the steps in fig. 4 are performed once a candidate component 118 is selected. Fig. 5 illustrates the example process graphics 110 shown on the display once a candidate component 118 is selected.

In step S202, predicting, by the control unit 104, once a candidate component is selected, a set of additional elements 130 of the industrial automation system that are functionally connectable with the selected candidate component 118. The additional element 130 are typically connections between candidate components such as tubes, pipes, wiring, etc. The prediction is made by processing data of the selected component 118 in the machine learning algorithm 122 which may be trained to predict additional elements 130 based on the present configuration of the process graphics and the components therein.

In step S204, the control unit 104 inserts one of the additional elements 130 in the process graphic shown on the computer display. In preferred embodiments, the control unit 104 is configured to control the display to show an overlay 132 of the at least one predicted additional element 130 in the process graphic 110 shown on the display screen. That is a set of possible additional elements, "connected" to the selected one, will appear on overlay in the display 102. The operator can then easily extend the graphic 110 with the most used elements according to the same criteria, i.e., technical configurations, other components, and compatibility, and algorithms used for the first drawn component 118, by confirming the insertion of the additional elements 130.

There is further provided a computer program product comprising a computer readable medium having stored thereon computer program code for insert components into a process graphic of an industrial automation system, wherein the computer program product comprises: code for receiving a data signal indicating a drawing input in a working area of a graphical platform shown on a computer display; code for identifying a working area of the drawing input; code for identifying at least one characteristic of the drawing input, code for predicting at least one candidate component from a list of available components stored in a data storage that best matches the at least one characteristic of the drawing input, and code for providing a list of the at least one candidate component on the computer display. The computer program product may be run by the control unit 104.

A control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which correspond to tangible media such as data storage media, or communication media including any media that facilitate the transfer of a computer program from one place to another, e.g., according to a communication protocol. In this manner, computer-readable media generally may correspond to (1) tangible computer-readable storage media which are non-transitory or (2) a communication media such as signal or carrier waves. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A computer-implemented method to insert components (116, 118, 120) into a process graphic (120) of an industrial automation system, the method comprising:
receiving (S102) a data signal indicating a drawing input (112) in a working area (114) of a graphical platform shown on a computer display;
identifying (S104) the working area (114) of the drawing input;
identifying (S106) at least one characteristic of the drawing input,
predicting (S108) at least one candidate component from a list of available components (116, 118, 120) stored in a data storage (108) that best matches the at least one characteristic of the drawing input by evaluating the components already included in the process graphic of the industrial automation system, and predicting the at least one candidate component that functionally matches the already included components, and
providing (S110) a list of the at least one candidate component on the computer display.

2. The computer-implemented method according to claim 1, comprising:
receiving (S112) a signal indicating a selection of a component from the list of the at least one candidate component, and
replacing (S114) the drawing input with the selected candidate component in the working area.

3. The computer-implemented method according to any one of the preceding claims, comprising:
obtaining (S107a) data indicating technical requirements of the industrial automation system, wherein predicting the at least one candidate component includes finding at least one candidate component that fulfill the technical requirements.

4. The computer-implemented method according to any one of the preceding claims, comprising:
accessing (S107b) selection history of candidate components, wherein the step of predicting comprises evaluating the selection history for predicting the at least one candidate component.

5. The computer-implemented method according to any one of the preceding claims, comprising:
providing, once a candidate component is selected, a list of selectable available configurations of the selected candidate component.

6. The method according to any one of the preceding claims, comprising:
predicting (S202) once a candidate component is selected, a set of additional elements of the industrial automation system that are functionally connectable with the selected candidate component, and
inserting (S204) one of the additional elements in the process graphic shown on the computer display.

7. The method according to claim 6, comprising:
displaying (S206), on the display screen, an overlay of the at least one predicted additional element in the process graphic shown on the display screen.

8. The method according to any one of the preceding claims, comprising:
providing a machine learning recognition algorithm (122);
processing the at least partial drawing in the machine learning recognition algorithm to predict the at least one candidate component.

9. The method according to claim 8, comprising:
performing training of the machine learning recognition algorithm using data of historical component selections.

10. The computer-implemented method according to any one of the preceding claims, wherein the drawing input is received from a user input interface (106) including at least one of a touch screen interface, a graphic board interface, a keyboard, and a mouse device.

11. The computer-implemented method according to any one of the preceding claims, wherein the at least one characteristic of the drawing input includes the shape of the drawing input.

12. The computer-implemented method according to any one of the preceding claims, wherein predicting comprises disregarding components that are incompatible with components already in the process graphics.

13. A control unit (104) configured to perform the steps of any one of the preceding claims.

14. A system comprising a computer display (102) and a control unit according to claim 13.

15. A computer program product comprising a computer readable medium having stored thereon computer program code for insert components into a process graphic of an industrial automation system, wherein the computer program product comprises:
code for receiving a data signal indicating a drawing input in a working area of a graphical platform shown on a computer display;
code for identifying a working area of the drawing input;
code for identifying at least one characteristic of the drawing input,
code for predicting at least one candidate component from a list of available components stored in a data storage that best matches the at least one characteristic of the drawing input by evaluating the components already included in the process graphic of the industrial automation system, and predicting the at least one candidate component that functionally matches the already included components, and
code for providing a list of the at least one candidate component on the computer display.

## Patentansprüche

1. Computerimplementiertes Verfahren zum Einfügen von Komponenten (116, 118, 120) in eine Prozessgrafik (120) eines Industrieautomatisierungssystems, wobei das Verfahren umfasst:
Empfangen (S102) eines Datensignals, das eine Zeichnungseingabe (112) in einem Arbeitsbereich (114) einer auf einem Computerbildschirm gezeigten grafischen Plattform angibt;
Identifizieren (S104) des Arbeitsbereichs (114) der Zeichnungseingabe;
Identifizieren (S106) von mindestens einer Charakteristik der Zeichnungseingabe;
Vorhersagen (S108) von mindestens einer Kandidatenkomponente von einer in einem Datenspeicher (108) gespeicherten Liste verfügbarer Komponenten (116, 118, 120), die am besten mit der mindestens einen Charakteristik der Zeichnungseingabe übereinstimmt, durch Auswerten der bereits in der Prozessgrafik des Industrieautomatisierungssystems enthaltenen Komponenten und Vorhersagen der mindestens einen Kandidatenkomponente, die mit den bereits enthaltenen Komponenten funktionell übereinstimmt, und Bereitstellen (S110) einer Liste der mindestens einen Kandidatenkomponente auf dem Computerbildschirm.

2. Computerimplementiertes Verfahren nach Anspruch 1, umfassend:
Empfangen (S112) eines Signals, das eine Auswahl einer Komponente von der Liste der mindestens einen Kandidatenkomponente angibt, und
Ersetzen (S114) der Zeichnungseingabe durch die ausgewählte Kandidatenkomponente in dem Arbeitsbereich.

3. Computerimplementiertes Verfahren nach einem der vorstehenden Ansprüche, umfassend:
Erhalten (S107a) von Daten, die technische Anforderungen des Industrieautomatisierungssystems angeben, wobei das Vorhersagen der mindestens einen Kandidatenkomponente das Finden von mindestens einer Kandidatenkomponente, welche die technischen Anforderungen erfüllt, umfasst.

4. Computerimplementiertes Verfahren nach einem der vorstehenden Ansprüche, umfassend:
Zugreifen (S107b) auf eine Auswahlhistorie von Kandidatenkomponenten, wobei der Schritt des Vorhersagens das Auswerten der Auswahlhistorie zum Vorhersagen der mindestens einen Kandidatenkomponente umfasst.

5. Computerimplementiertes Verfahren nach einem der vorstehenden Ansprüche, umfassend:
Bereitstellen einer Liste von auswählbaren verfügbaren Konfigurationen der ausgewählten Kandidatenkomponente, sobald eine Kandidatenkomponente ausgewählt ist.

6. Verfahren nach einem der vorstehenden Ansprüche, umfassend:
Vorhersagen (S202) einer Reihe zusätzlicher Elemente des Industrieautomatisierungssystems, die mit der ausgewählten Kandidatenkomponente funktional verbindbar sind, sobald eine Kandidatenkomponente ausgewählt ist und
Einfügen (S204) von einem der zusätzlichen Elemente in die auf dem Computerbildschirm gezeigte Prozessgrafik.

7. Verfahren nach Anspruch 6, umfassend:
Anzeigen (S206), auf dem Bildschirm, einer Überlagerung des mindestens einen vorhergesagten zusätzlichen Elements in der auf dem Bildschirm gezeigten Prozessgrafik.

8. Verfahren nach einem der vorstehenden Ansprüche, umfassend:
Bereitstellen eines Maschinelles-Lernen-Erkennungsalgorithmus (122);
Verarbeiten der mindestens teilweisen Zeichnung in dem Maschinelles-Lernen-Erkennungsalgorithmus, um die mindestens eine Kandidatenkomponente vorherzusagen.

9. Verfahren nach Anspruch 8, umfassend:
Ausführen eines Trainings des Maschinelles-Lernen-Erkennungsalgorithmus unter Verwendung von Daten von historischen Komponentenauswahlvorgängen.

10. Computerimplementiertes Verfahren nach einem der vorstehenden Ansprüche, wobei die Zeichnungseingabe von einer Benutzereingabeschnittstelle (106) einschließlich mindestens einem von eine Touchscreenschnittstelle, einer Grafikkartenschnittstelle, einer Tastatur und einer Mausvorrichtung empfangen wird.

11. Computerimplementiertes Verfahren nach einem der vorstehenden Ansprüche, wobei die mindestens eine Charakteristik der Zeichnungseingabe die Form der Zeichnungseingabe umfasst.

12. Computerimplementiertes Verfahren nach einem der vorstehenden Ansprüche, wobei das Vorhersagen das Nichtbeachten von Komponenten, die mit bereits in der Prozessgrafik vorhandenen Komponenten inkompatibel sind, umfasst.

13. Steuereinheit (104), die eingerichtet ist, die Schritte nach einem der vorstehenden Ansprüche auszuführen.

14. System, das eine Computeranzeige (102) und eine Steuereinheit nach Anspruch 13 umfasst.

15. Computerprogrammprodukt, das ein computerlesbares Medium umfasst, auf dem Computerprogrammcode zum Einfügen von Komponenten in eine Prozessgrafik eines Industrieautomatisierungssystems gespeichert ist, wobei das Computerprogrammprodukt umfasst:
Code zum Empfangen eines Datensignals, das eine Zeichnungseingabe in einem Arbeitsbereich einer auf einem Computerbildschirm gezeigten grafischen Plattform angibt;
Code zum Identifizieren eines Arbeitsbereichs der Zeichnungseingabe;
Code zum Identifizieren von mindestens einer Charakteristik der Zeichnungseingabe,
Code zum Vorhersagen von mindestens einer Kandidatenkomponente von einer in einem Datenspeicher gespeicherten Liste verfügbarer Komponenten, die am besten mit der mindestens einen Charakteristik der Zeichnungseingabe übereinstimmt, durch Auswerten der bereits in der Prozessgrafik des Industrieautomatisierungssystems enthaltenen Komponenten und Vorhersagen der mindestens einen Kandidatenkomponente, die mit den bereits enthaltenen Komponenten funktionell übereinstimmt, und
Code zum Bereitstellen einer Liste der mindestens einen Kandidatenkomponente auf dem Computerbildschirm.

## Revendications

1. Procédé mis en œuvre par ordinateur pour l'insertion de composants (116, 118, 120) dans un graphique de processus (120) d'un système d'automatisation industriel, le procédé comprenant :
la réception (S102) d'un signal de données indiquant une entrée de dessin (112) dans une zone de travail (114) d'une plateforme graphique représentée sur un écran d'ordinateur ;
l'identification (S104) de la zone de travail (114) de l'entrée de dessin ;
l'identification (S106) d'au moins une caractéristique de l'entrée de dessin,
la prédiction (S108) d'au moins un composant candidat correspondant le mieux à l'au moins une caractéristique de l'entrée de dessin, à partir d'une liste de composants disponibles (116, 118, 120) stockée dans une mémoire de données (108), par évaluation des composants déjà inclus dans le graphique de processus du système d'automatisation industriel et par prédiction de l'au moins un composant candidat correspondant fonctionnellement aux composants déjà inclus, et
la mise à disposition (S110) d'une liste de l'au moins un composant candidat sur l'écran d'ordinateur.

2. Procédé mis en œuvre par ordinateur selon la revendication 1, comprenant :
la réception (S112) d'un signal indiquant une sélection d'un composant à partir de la liste dudit au moins un composant candidat, et
le remplacement (S114) de l'entrée de dessin par le composant candidat sélectionné dans la zone de travail.

3. Procédé mis en œuvre par ordinateur selon l'une quelconque des revendications précédentes, comprenant :
l'obtention (S107a) de données indiquant des exigences techniques du système d'automatisation industriel, dans lequel la prédiction de l'au moins un composant candidat inclut la recherche d'au moins un composant candidat répondant aux exigences techniques.

4. Procédé mis en œuvre par ordinateur selon l'une quelconque des revendications précédentes, comprenant :
l'accès (S107b) à un historique de sélection de composants candidats, dans lequel l'étape de prédiction comprend l'évaluation de l'historique de sélection pour la prédiction de l'au moins un composant candidat.

5. Procédé mis en œuvre par ordinateur selon l'une quelconque des revendications précédentes, comprenant :
la mise à disposition d'une liste de configurations disponibles sélectionnables du composant candidat sélectionné une fois qu'un composant candidat est sélectionné.

6. Procédé selon l'une quelconque des revendications précédentes, comprenant :
la prédiction (S202), une fois qu'un composant candidat est sélectionné, d'un ensemble d'éléments supplémentaires du système d'automatisation industriel, lesquels sont aptes à être connectés fonctionnellement au composant candidat sélectionné, et
l'insertion (S204) de l'un des éléments supplémentaires dans le graphique de processus représenté sur l'écran d'ordinateur.

7. Procédé selon la revendication 6, comprenant :
l'affichage (S206), sur l'écran d'affichage, d'une superposition de l'au moins un élément supplémentaire prédit dans le graphique de processus représenté sur l'écran d'affichage.

8. Procédé selon l'une quelconque des revendications précédentes, comprenant :
la mise à disposition d'un algorithme de reconnaissance d'apprentissage machine (122) ;
le traitement du dessin au moins partiel dans l'algorithme de reconnaissance d'apprentissage machine pour prédire l'au moins un composant candidat.

9. Procédé selon la revendication 8, comprenant :
l'entraînement de l'algorithme de reconnaissance d'apprentissage machine à l'aide de données de sélections historiques de composants.

10. Procédé mis en œuvre par ordinateur selon l'une quelconque des revendications précédentes, dans lequel l'entrée de dessin est reçue à partir d'une interface d'entrée d'utilisateur (106) incluant au moins l'une parmi une interface à écran tactile, une interface de tablette graphique, un clavier et dispositif de souris.

11. Procédé mis en œuvre par ordinateur selon l'une quelconque des revendications précédentes, dans lequel l'au moins une caractéristique de l'entrée de dessin comprend la forme de l'entrée de dessin.

12. Procédé mis en œuvre par ordinateur selon l'une quelconque des revendications précédentes, dans lequel la prédiction comprend l'exclusion de composants incompatibles avec des composants déjà présents dans le graphique de processus.

13. Unité de commande (104) configurée pour mettre en œuvre les étapes selon l'une quelconque des revendications précédentes.

14. Système comprenant un écran d'ordinateur (102) et une unité de commande selon la revendication 13.

15. Produit de programme informatique comprenant un support lisible par ordinateur sur lequel est stocké un code de programme informatique pour l'insertion de composants dans un graphique de processus d'un système d'automatisation industriel, dans lequel le produit de programme informatique comprend :
un code destiné à la réception d'un signal de données indiquant une entrée de dessin dans une zone de travail d'une plateforme graphique représentée sur un écran d'ordinateur ;
un code destiné à l'identification d'une zone de travail de l'entrée de dessin ;
un code destiné à l'identification d'au moins une caractéristique de l'entrée de dessin,
un code destiné à la prédiction d'au moins un composant candidat correspondant le mieux à l'au moins une caractéristique de l'entrée de dessin, à partir d'une liste de composants disponibles stockée dans une mémoire de données, par évaluation des composants déjà inclus dans le graphique de processus du système d'automatisation industriel, et par prédiction de l'au moins un composant candidat correspondant fonctionnellement aux composants déjà inclus, et
un code destiné à la mise à disposition d'une liste de l'au moins un composant candidat sur l'écran d'ordinateur.
